# EUROPEAN PATENT APPLICATION

(11) **EP 3 836 415 A1**
(43) Date of publication of application: **16.06.2021**
(21) Application number: 18929590.0
(22) Date of filing: 09.08.2018
(51) Int. Cl.: H04B 7/0456, H04W 52/18

(54) **USER TERMINAL AND WIRELESS COMMUNICATION METHOD**

(71) Applicant: NTT DoCoMo, Inc., Tokyo 100-6150 (JP)
(72) Inventor: MATSUMURA, Yuki, Tokyo 100-6150 (JP); KAKISHIMA, Yuichi, Tokyo 100-6150 (JP); TAKEDA, Kazuaki, Tokyo 100-6150 (JP); NAGATA, Satoshi, Tokyo 100-6150 (JP)
(74) Representative: Hoffmann Eitle
(86) International application number: PCT/JP2018/029995
(87) International publication number: WO 2020/031352

(57) **Abstract**

A user terminal includes: a transmitting section configured to transmit a signal based on a precoding matrix; and a control section configured to correct transmission power of the signal when a value of a part of the precoding matrix is zero. According to one aspect of the present disclosure, the transmission power when performing precoding can be appropriately determined.

## Description

### Technical Field

The present disclosure relates to a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see Non-Patent Literature 1). In addition, the specifications of LTE-A (LTE Advanced, LTE Rel. 10, 11, 12, and 13) have been drafted for the purpose of further increasing the capacity and sophistication of LTE (LTE Rel. 8 and 9).

LTE successor systems (for example, referred to as FRA (Future Radio Access), 5G (5th generation mobile communication system), 5G+ (plus), NR (New Radio), NX (New radio access), FX (Future generation radio access), LTE Rel. 14 or 15 or later) are also under study.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (e.g., NR), it is considered that the UE will support at least one of codebook (CB)-based transmission and non-codebook (NCB)-based transmission.

Depending on the precoding matrix determined based on the CB-based transmission and the NCB-based transmission, the UE may not be able to use all of the transmission power determined by the transmission power control. If all of the transmission power cannot be used, system performance may deteriorate, such as reduced coverage.

Therefore, one of the purposes of the present disclosure is to provide a user terminal and a radio communication method capable of appropriately determining the transmission power when performing precoding.

### Solution to Problem

The user terminal according to one aspect of the present disclosure includes a transmitting section that transmits a signal based on a precoding matrix, and a control section that corrects the transmission power of the signal when the value of a part of the precoding matrix is zero.

### Advantageous Effects of Invention

According to one aspect of the present disclosure, the transmission power when performing precoding can be appropriately determined.

### Brief Description of Drawings

Fig. 1 is a diagram showing an example of codebook-based transmission.
Fig. 2 is a diagram showing an example of non-codebook-based transmission.
Fig. 3 is a diagram showing an example of a UE antenna model.
Fig. 4 is a diagram showing an example of association between a precoder type and a TPMI index.
Fig. 5 is a diagram showing an example of association between a TPMI index and a precoding matrix.
Fig. 6 is a diagram showing an example of a relationship between transmission power correction and coverage.
Fig. 7 is a diagram showing an example of a random access procedure.
Fig. 8 is a diagram showing another example of a random access procedure.
Fig. 9 is a diagram showing an example of a schematic configuration of a radio communication system according to one embodiment.
Fig. 10 is a diagram showing an example of an overall configuration of a base station according to one embodiment.
Fig. 11 is a diagram showing an example of a functional configuration of a base station according to one embodiment.
Fig. 12 is a diagram showing an example of an overall configuration of a user terminal according to one embodiment.
Fig. 13 is a diagram showing an example of a functional configuration of a user terminal according to one embodiment.
Fig. 14 is a diagram showing an example of a hardware structure of a base station and a user terminal according to one embodiment.

### Description of Embodiments

In the NR, it is considered that the UE will support at least one of codebook (CB)-based transmission and non-codebook (NCB)-based transmission. For example, it is considered that the UE uses at least a measurement reference signal (SRS: Sounding Reference Signal) resource index (SRI: SRS Resource Index) to judge a precoder (precoding matrix) for at least one of CB-based and NCB-based PUSCH transmissions.

For example, in the case of CB-based transmission, the UE may determine the precoder for PUSCH transmission based on SRI, Transmitted Rank Indicator (TRI) and Transmitted Precoding Matrix Indicator (TPMI). For the NCB-based transmission, the UE may determine a precoder for PUSCH transmission based on the SRI.

The precoding applied to the CB-based transmission may be referred to as CB-based precoding. The precoding applied to the NCB-based transmission may be referred to as NCB-based precoding.

The CB-based transmission and the NCB-based transmission may be referred to as CB transmission and NCB transmission, respectively.

CB transmission and NCB transmission up to four layers may be supported. Frequency selective precoding may be supported for four antenna ports.

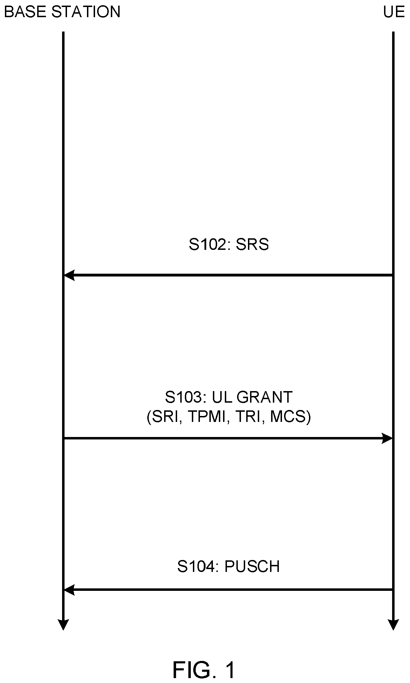

Fig. 1 is a diagram showing an example of CB transmission. The UE may be configured with an SRS resource set for a given number of SRS resources.

SRS resources may be specified on the basis of at least one of pieces of information including SRS resource locations (e.g., time and/or frequency resource locations, resource offsets, resource cycles, number of SRS symbols, SRS bandwidth, combs, sequence IDs, etc.), number of SRS ports, SRS port numbers, SRS resource numbers (which may be referred to as an SRS resource configuration ID (SRS-ResourceConfigId) etc.).

Information regarding the SRS resource set (SRS resource) may be configured in the UE using higher layer signaling.

In step S102, the UE transmits an SRS using the configured SRS resource set. The base station may use SRS resources to perform measurement (e.g., channel measurement).

In step S103, the UE may be notified, by the base station, of information regarding at least one of SRI, TRI, and TPMI using higher layer signaling, physical layer signaling (e.g., Downlink Control Information (DCI)), or a combination thereof. The information may be included in the DCI (which may be referred to as UL grant) that schedules PUSCH transmission. The DCI may include an MCS (Modulation and Coding Scheme) for PUSCH transmission.

For example, the UE may select one SRS resource from the configured SRS resources based on the SRI contained in the received DCI. The UE may determine a preferred precoder for the SRS port in the selected SRS resource based on the TPMI contained in the received DCI. The UE may determine the number of ports used for transmission from the SRS ports in the selected SRS resource based on the TRI contained in the received DCI.

In step S104, the UE uses the SRS port of the SRS resource designated by the DCI to determine a precoder (codebook) using TPMI and TRI, and performs PUSCH transmission using the precoder.

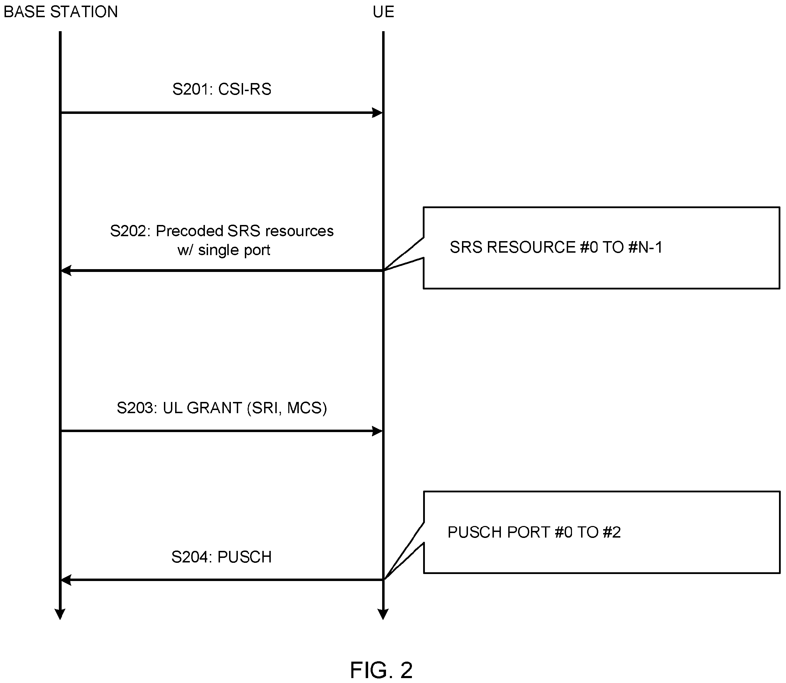

Fig. 2 is a diagram showing an example of NCB transmission. In step S201, the base station (gNB, which may be referred to as Transmission/Reception Point (TRP), etc.) transmits a reference signal (RS), and the UE performs measurement using the reference signal.

The RS may be at least one of a channel state measurement RS (CSI-RS: Channel State Information RS), a primary synchronization signal (PSS: Primary SS), a secondary synchronization signal (SSS: Secondary SS), a mobility reference signal (MRS: Mobility RS), a tracking reference signal (TRS: Tracking RS), a signal contained in a synchronization signal block (SSB), a demodulation reference signal (DMRS), a beam-specific signal, etc., or a signal configured by expanding and/or modifying the signal (e.g., signal configured by varying the density and/or period).

The RS in step S201 is described as CSI-RS, but is not limited to this. The CSI-RS may be read as any of the above RSs.

In step S202, the UE may transmit an SRS using precoded single port SRS resources (precoded SRS resources w/ single port).

The UE may determine a precoder to be applied to the SRS (SRS precoder) by a reciprocity-based method. For example, the UE may determine the SRS precoder based on a relevant CSI-RS (e.g., the CSI-RS resource measured in step S201, the location of the CSI-RS resource, the measurement result using the resource, etc.).

Note that one or more SRS resources may be configured for the UE. The UE may be configured with an SRS resource set associated with a given number of SRS resources. The number of SRS resources or SRS resource sets configured for the UE may be limited by the maximum transmission rank (number of layers). Each SRS resource may have one or more SRS ports (may correspond to one or more SRS ports).

In this example, it is assumed that the UE is configured with an SRS resource set containing N SRS resources (SRS resources #0 to #N-1 corresponding to SRI = 0 to N-1, respectively). It is also assumed that each SRS resource has one SRS port.

SRS resources may be specified on the basis of at least one of pieces of information including SRS resource locations (e.g., time and/or frequency resource locations, resource offsets, resource cycles, number of SRS symbols, SRS bandwidth, combs, sequence IDs, etc.), signal sequences, number of SRS ports, SRS port numbers, SRS resource numbers (which may be referred to as an SRS resource configuration ID (SRS-ResourceConfigId) etc.).

Information about the SRS resource set and/or SRS resource may be configured in the UE using higher layer signaling, physical layer signaling, or a combination thereof.

The UE may be configured with information about the correspondence relationship between the SRS precoder and the relevant CSI-RS by using higher layer signaling or the like.

In step S202, the UE may transmit each of the precoded SRS resources #0 to #N-1.

The base station may perform measurement (e.g., channel measurement) using the precoded SRS resources of step S202. The base station performs beam selection based on the measurement result. In this example, the base station selects three SRS resources from N SRS resources and determines that the TRI is three.

In step S203, the base station transmits a UL grant to the UE to schedule UL data transmission. In step S204, the UE transmits a signal (e.g., PUSCH) to which a given precoder (e.g., at least one of the SRS precoders) is applied, based on the UL grant of step S203.

The UL grant of step S203 preferably contains information (e.g., SRI) for specifying the precoder used for UL data transmission. The UL grant may include information about parameters (e.g., MCS (Modulation and Coding Scheme)) applied to the UL data transmission. In addition, the UL grant may or may not include a TRI and/or a TPMI applied to the UL data transmission.

The gNB may narrow down the precoders used by the UE for PUSCH transmission, for example, by notification of an SRI. For example, the UE may specify one or more SRS resources from the configured SRS resources based on one or more SRIs contained in the UL grant received in step S203. In this case, the UE may use the precoder corresponding to the specified SRS resource to transmit the PUSCH of the number of layers corresponding to the number of the specified SRS resources in step S204.

In this example, the UL grant of step S203 designated TRI = 3, three SRIs, and the UE uses a precoder corresponding to the three SRIs in step S204 to perform transmission of three layers, PUSCH ports #0 to #2.

The UE may determine the precoder based on an SRI other than the SRI designated by the UL grant and perform transmission.

If the received UL grant contains a TPMI, the UE may determine a preferred precoder for the SRS port in the selected SRS resource based on the TPMI. If the received UL grant includes a TRI, the UE may determine the number of ports used for transmission from the SRS ports in the selected SRS resource based on the TRI.

The UE may report UE capability information regarding the precoder type, and the precoder type based on the UE capability information may be configured by higher layer signaling from the base station. The UE capability information may be precoder type information (may be represented by the parameter "pusch-TransCoherence") used by the UE in PUSCH transmission.

The UE may determine the precoder used for PUSCH (and PTRS) transmission based on the precoder type information (which may be represented by the parameter "codebookSubset") contained in the PUSCH configuration information (PUSCH-Config information element of RRC signaling) notified by higher layer signaling.

The precoder type may be designated by any of full coherent, fully coherent, coherent, partial coherent, non-coherent, or a combination of at least two of them (for example, which may be represented by parameters such as "fullyAndPartialAndNonCoherent", "partialAndNonCoherent").

Full coherent may mean that the antenna ports used for transmission are synchronized (may be expressed as phase-matched, the same precoder applied, etc.). Partial coherent may mean that some of the antenna ports used for transmission are synchronized, but cannot be synchronized. Non-coherent may mean that the antenna port used for transmission cannot be synchronized.

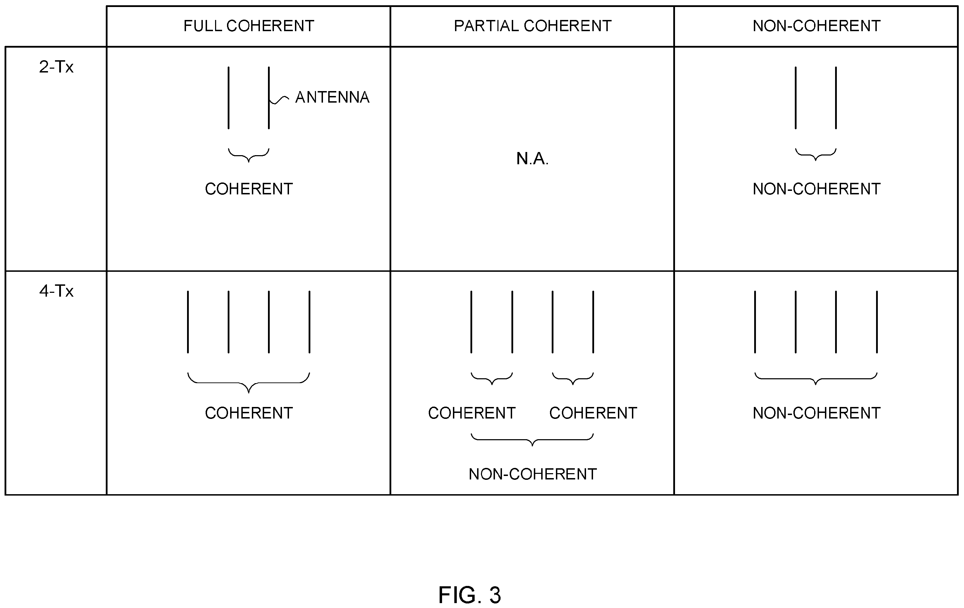

The UE antenna model shown in Fig. 3 is considered for the UL codebook design of NR. Codebooks may be defined for fully coherent, partially coherent, and non-coherent.

With respect to two antenna ports (2-Tx), fully coherent allows the two antenna ports to be connected to one RF circuit and the phase to be adjusted between the two antenna ports. Partial coherence does not apply. In non-coherent, each antenna port is connected to a different RF circuit, and it is impossible to adjust the phase between the two antenna ports. With respect to four antenna ports (4-Tx), fully coherent allows the four antenna ports to be connected to one RF circuit and the phase to be adjusted between the four antenna ports. In partial coherence, pairs of two antenna ports are connected to one RF circuit and the phase of the two antenna ports in each pair can be adjusted, but each pair is connected to a different RF circuit and the phase between the two pairs cannot be adjusted. In non-coherent, each antenna port is connected to a different RF circuit, and it is impossible to adjust the phase between the four antenna ports.

Coherency will be described by taking as an example a case where a MIMO (Multi-Input Multi-Output) antenna is configured by using a panel. Here, it is assumed that an RF (Radio Frequency) circuit is different (independent) for each panel. In this case, the antenna ports (and thus the antenna elements) in the panel can be synchronized, but it cannot be guaranteed that the panels can be synchronized.

If the UE performs UL transmission using only the antenna port corresponding to one panel, it may be assumed to be fully coherent. If the UE performs UL transmission using antenna ports corresponding to multiple panels and there are multiple antenna ports corresponding to at least one panel, it may be assumed to be partial coherent. If the UE performs UL transmission using antenna ports corresponding to a plurality of panels and one antenna port corresponds to each panel, it may be assumed to be non-coherent.

A UE that supports a fully coherent precoder type may be assumed to support partial coherent and non-coherent precoder types. A UE that supports a partial coherent precoder type may be assumed to support a non-coherent precoder type.

The precoder type may be read as coherency, PUSCH transmission coherence, coherent type, coherence type, codebook type, codebook subset, codebook subset type, and the like.

The UE may determine the precoding matrix (codebook) corresponding to a TPMI index obtained from the DCI that schedules UL transmission from multiple precoders (precoding matrices) for CB-based transmission.

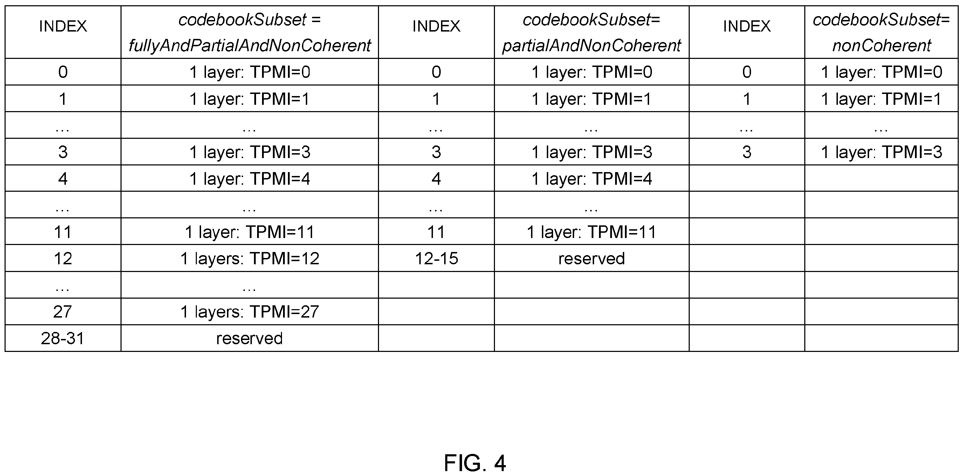

For example, as shown in Fig. 4, DFT-S-OFDM (Discrete Fourier Transform-Spread-OFDM, transform precoding is enabled) or CP (Cyclic Prefix) -OFDM (transform precoding is disabled) may be used such that precoding information (number of layers, TPMI) for four antenna ports when the maximum rank is 1 may be specified in the specification. If the precoder type (codebookSubset) is fullyAndPartialAndNonCoherent, the UE is configured with a TPMI of 0 to 27 for a single layer. If the precoder type is partialAndNonCoherent, the UE is configured with a TPMI of 0 to 11 for a single layer. If the precoder type is nonCoherent, the UE is configured with a TPMI of 0 to 3 for a single layer.

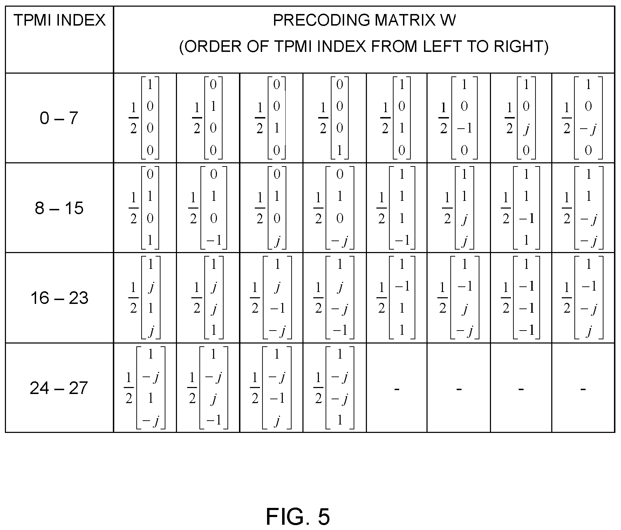

For example, as shown in Fig. 5, a plurality of precoding matrices for single layer transmission using the four antenna ports when DFT-S-OFDM is used (transform precoding is enabled) may be specified in the specification. Similarly, a plurality of precoding matrices for single layer transmission using the four antenna ports when CP-OFDM is used (transform precoding is disabled) may be specified in the specification. A plurality of precoding matrices may be associated with a plurality of TPMI indexes.

Of the TPMIs corresponding to the precoder type "fullyAndPartialAndNonCoherent", the TPMIs (12 to 27) excluding the TPMI corresponding to the precoder type "partialAndNonCoherent" correspond to the fully coherent precoding matrix. In the fully coherent precoding matrix, the four antenna ports have the same amplitude because the four elements (values) are nonzero.

Of the TPMIs corresponding to the precoder type "partialAndNonCoherent", the TPMIs (4 to 11) excluding the TPMI corresponding to the precoder type "noncoherent" correspond to the partial coherent precoding matrix. In the partial coherent precoding matrix, the two elements are nonzero. Therefore, the transmission power is allocated to only the amplitude of two of the four antenna ports, and the remaining two antenna ports have zero transmission power.

The TPMI (0 to 3) corresponding to the precoder type "noncoherent" corresponds to the non-coherent precoding matrix. In the non-coherent precoding matrix, one element is nonzero, and the transmission power is 0 for three of the four antenna ports.

Also in the case of NCB transmission, the UE that reports a non-coherent precoder type or a partial coherent and non-coherent precoder type may be 0 in some elements in the precoding matrix.

The UE also determines the transmission power available to the PUSCH through transmission power control (TPC). The UE adjusts the linear value of the transmission power by the ratio of the number of antenna ports used for non-zero PUSCH transmission to the number of antenna ports configured for the transmission method. The power scaled by this is evenly distributed across the antenna ports where the non-zero PUSCH is transmitted (transmission power distribution).

Since the UE divides the transmission power into multiple antenna ports and multiplies the signals of the multiple antenna ports by the precoding matrix, when the precoding matrix has an element of zero, such as the partial coherent precoding matrix or the non-coherent precoding matrix, the total transmission power is reduced by the transmission power of the corresponding antenna port.

Therefore, if the UE performs CP-OFDM (transform precoding is disabled) or DFT-S-OFDM (transform precoding is enabled) uplink MIMO (using two or more antenna ports) and the rank is 1, in the NCB-based transmission or the CB-based transmission, the UE using the non-coherent or partial coherent precoding matrix has a reduced total transmission power as compared to using the full coherent precoding matrix. In other words, the UE that uses the non-coherent or partial coherent precoding matrix cannot use all of the transmission power determined by the transmission power control.

Therefore, the present inventors have conceived a method of correcting the transmission power when the value of a part of the precoding matrix becomes 0.

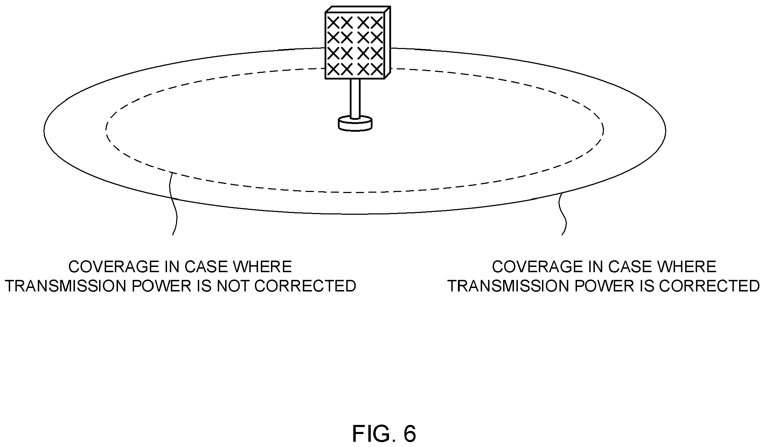

Also, if the UE supports the function to correct the transmission power, the NW (network, for example, base station, gNB) cannot know until it is RRC-connected to the UE whether the UE supports the function and to which specifications (release) the UE is compliant. Therefore, as shown in Fig. 6, even if the coverage when the transmission power is corrected is larger than the coverage when the transmission power is not corrected, if the function cannot be used before the RRC connection, the coverage of the UE that has the function will be the same as the coverage of the UE that does not have the function.

Therefore, the present inventors have conceived a method for improving coverage when supporting the function of correcting the transmission power.

Hereinafter, embodiments according to the present disclosure will be described in detail with reference to the drawings. The radio communication method according to each of the embodiments may be applied independently, or may be applied in combination with others.

The PUSCH in the description of the present disclosure may be read as a UL channel (PUCCH etc.), a UL signal (SRS etc.), and the like.

In the following embodiments, the CB transmission will be mainly described, but these embodiments can also be applied to the NCB transmission. The following embodiments can be applied to both UL transmission using CP-OFDM and UL transmission using DFT-S-OFDM.

In the present disclosure, the higher layer signaling may be, for example, any of RRC (Radio Resource Control) signaling, MAC (Medium Access Control) signaling, broadcast information and so on, or a combination thereof.

For the MAC signaling, for example, a MAC control element (MAC CE), a MAC PDU (Protocol Data Unit), or the like may be used. The broadcast information may be, for example, a master information block (MIB), a system information block (SIB), a minimum system information (Remaining Minimum System Information (RMSI)), other system information (OSI), or the like.

### (Radio Communication Method)

### <Aspect 1>

The UE may support at least one of the following transmission power determination methods 1 to 3. At least one of the transmission power determination methods 1 to 3 may be specified as a type.

### > Transmission power determination method 1

The UE first divides the transmission power for each antenna port (transmission power distribution) and then perform precoding.

### > Transmission power determination method 2

The UE, based on at least one of the information configured by the NW (such as the TPMI index) and the UE capability information reported by the UE (such as the precoder type), determines whether the precoder is full coherent (TPMI index is a value from 12 to 27, all elements (values) of the precoding matrix are nonzero, etc.) or partial or non-coherent (TPMI index is a value from 0 and 11, some elements of the precoding matrix are zero, the UE has reported partialAndNonCoherent or nonCoherent, etc.), and, depending on the determination result, performs either the full coherent transmission power determination method or the partial or non-coherent transmission power determination method.

### >>> Full coherent transmission power determination method

The UE first divides the transmission power for each antenna port and then perform precoding (similar to the transmission power determination method 1).

### >>> Partial/non-coherent transmission power determination method

The UE determines the transmission power per antenna port depending on the precoder type used.

The UE may determine the transmission power per antenna port according to one of the following antenna port transmission power determination methods 1 to 3.

### >>>> Antenna port transmission power determination method 1

The UE determines the transmission power per antenna port so that the total transmission power (sum transmission power) of all antenna ports is equal to the total transmission power when using the full coherent precoding matrix.

Assuming that the number of antenna ports is M and the number of non-zero elements in the precoding matrix is N, the UE may multiply the amplitude of the signal for multiplication of the precoding matrix or a multiplication result by (M/N)2.

For example, when the UE uses a non-coherent precoding matrix 1/2 (1,0,0,0) at four antenna ports (antenna ports #0 to #3), as compared with the case where the full coherent precoding matrix is used, the total transmission power is 1/4. Therefore, the transmission power of antenna port #0 is corrected by 4 times (the amplitude is corrected by 16 times).

Since the UE can transmit using the same total transmission power as when using the full coherent precoding matrix, the coverage and the SN ratio (communication quality) can be improved.

### >>>> Antenna port transmission power determination method 2

The UE determines the transmission power per antenna port so that the total transmission power (sum transmission power) of all antenna ports is al times the total transmission power when using the full coherent precoding matrix. Here, α1 may be 1 or less, or may be smaller than 1.

As the transmission power per antenna port increases, the required performance of the UE signal amplifier increases, which may increase the cost. By configuring α1, the transmission power can be suppressed and the required performance of the signal amplifier can be suppressed.

The symbol α1 may be specified in the specifications. The UE may be configured with α1 by higher layer signaling. The UE may use a value reported by the UE capability information. Here, the UE may report one of a plurality of candidates specified in the specifications.

The UE may multiply the amplitude of the signal for multiplication of the precoding matrix or the multiplication result by (M/N)² and multiply the power by α1.

### >>>> Antenna port transmission power determination method 3

The UE multiplies the transmission power per antenna port by α2 for the partial or non-coherent precoding matrix. Here, α2 may be 1 or more, or may be larger than 1.

The symbol α2 may be a coefficient that multiplies the precoding matrix as shown in Fig. 4. The UE may be configured with a coefficient for each TPMI index or may be configured with two values: a coefficient for non-coherent (TPMI corresponds to 0 to 3) and a coefficient for partial coherent (TPMI corresponds to 4 to 11).

The symbol α2 may be specified in the specifications. The UE may use a value reported by the UE capability information as α2. Here, the UE may report one of a plurality of candidates specified in the specifications.

The UE may be configured with α2 by higher layer signaling. Here, the UE may be configured with α2 for each rank.

The UE may be configured with multiple candidates for α2 by higher layer signaling, and one of the multiple candidates may be designated by the DCI (e.g., UL grant scheduling the PUSCH, DCI formats 0_0, 0_1). This DCI may include a bit field that designated a candidate, or may designate a candidate by a combination of a plurality of bit fields.

The UE may multiply the amplitude of the signal for multiplication of the precoding matrix or the multiplication result by α2.

The transmission power determination method 2 or the partial/non-coherent transmission power determination method may be referred to as a transmission power correction method, correction, transmission power increase method, full power, or the like.

According to this transmission power determination method 2, it is possible to suppress a reduction in the total transmission power when the partial coherent or non-coherent precoding matrix is used.

### > Transmission power determination method 3

Instead of distributing the transmission power determined by the transmission power control to multiple configured antenna ports, the UE may distribute the transmission power determined by the transmission power control to multiple antenna ports based on the ratio of elements in the precoding matrix.

For example, the UE may evenly distribute the transmission power determined by the transmission power control to the antenna ports corresponding to the non-zero elements in the precoding matrix. If the number of non-zero elements in the precoding matrix is 1, the UE may allocate the transmission power determined by the transmission power control to the one antenna port corresponding to that element. If the number of non-zero elements in the precoding matrix is 2, the UE may evenly allocate the transmission power determined by the transmission power control to the two antenna ports corresponding to that elements.

According to this transmission power determination method 3, it is possible to suppress a reduction in the total transmission power when the partial coherent or non-coherent precoding matrix is used.

### <Aspect 2>

The UE may report the capability related to the transmission power determination method 2 by the UE capability information.

The UE may use either of the following report methods 1 and 2.

### > Report method 1

UEs that report nonCoherent precoder types or partialAndNonCoherent precoder types by the UE capability information (e.g., codebook MIMO, pusch-TransCoherence) may report at least one of the following UE capabilities 1 to 4.

- UE capability 1: Whether it supports the transmission power determination method 2
- UE capability 2: Whether the UE supports α1 (the antenna port transmission power determination method 2 described above) and at least one of the values of α1.
- UE capability 3: Whether the UE supports α2 (the antenna port transmission power determination method 3 described above) and at least one of the values of α2.
- UE capability 4: The value of β (maximum amplification factor, maximum correction coefficient) that indicates how many times the transmission power or amplitude per antenna port can be increased by the UE.

The symbol β may be 1 or more. For example, when the UE uses a non-coherent precoding matrix 1/2 (1,0,0,0) in four antenna ports (antenna ports #0 to #3) and the antenna port transmission power determination method 1 is applied, it is necessary to correct the transmission power of antenna port #0 by 4 times (correct the amplitude by 16 times) as compared with the case of using the full coherent precoding matrix.

The UE that has reported β may amplify the transmission power or amplitude per antenna port up to β times in the partial or non-coherent determination method when a TPMI corresponding to partial or non-coherent is configured. Thus, the UE can limit the amplification based on the transmission power determination method 2 by β. By reporting β based on the performance of the signal amplifier, the UE can perform correction according to the performance of the signal amplifier, prevent correction exceeding the performance of the signal amplifier, and suppress the required performance.

### > Report method 2

The UE may report new UE capability information. This UE capability information may indicate at least one of non-coherent, partial coherent, and full coherent. At least one of non-coherent and partial coherent may be divided into a plurality of types depending on the presence or absence of at least one of the above-mentioned UE capabilities 1 to 4, and the UE capability information may indicate one type.

According to this aspect 2, the UE can appropriately determine the transmission power according to the UE capability.

### <Aspect 3>

The UE that supports the transmission power determination method 2 may perform at least one of the following operations 1 to 4.

### > Operation 1

The UE is configured with the transmission power determination method 2 by higher layer signaling (for example, RRC signaling).

The UE may be configured with the transmission power determination method 2 by being notified of at least one of the above-mentioned α1, α2, and β. The NW may notify at least one of α1, α2, and β based on the UE capability information reported by the UE.

### > Operation 2

The UE is configured with the transmission power determination method 2 by the DCI. The DCI may be, for example, a UL grant that schedules the PUSCH.

This DCI may include a bit field indicating the transmission power determination method 2, or may indicate the transmission power determination method 2 by combining a plurality of bit fields.

### > Operation 3

A UE that reports that it supports the transmission power determination method 2 by the UE capability information applies the transmission power determination method 2 to the PUSCH transmission after reporting (after RRC connection). That is, the UE applies the transmission power determination method 2 without being indicated by the NW. The UE does not apply the transmission power determination method 2 to Msg.3 PUSCH (before RRC connection).

By not applying the transmission power determination method 2 to Msg.3 PUSCH, the coverage is not improved, but the SN ratio (communication quality) after RRC connection can be improved.

The UE may apply CP-OFDM to PUSCHs other than Msg.3 (transform precoding may not be applied (disable)). Normally, when DFT-S-OFDM (transform precoding) is applied to Msg.3 PUSCH (enable) and CP-OFDM is applied to the PUSCH after RRC connection, with the CP-OFDM, as compared to the DFT-S-OFDM, the PAPR increases, and the coverage is reduced in the CP-OFDM as compared with the DFT-S-OFDM. Therefore, the coverage can be improved when the UE applies the transmission power determination method 2 to the PUSCH after the RRC connection.

### > Operation 4

A UE that reports that it supports the transmission power determination method 2 by the UE capability information applies the transmission power determination method 2 to the PUSCH transmission after Msg.3. The UE may always apply the transmission power determination method 2.

The coverage can be improved by the UE applying the transmission power determination method 2 before the RRC connection.

According to this aspect 3, the UE can appropriately apply the transmission power determination method 2.

### <Aspect 4>

UEs that support the transmission power determination method 2 may apply the transmission power determination method 2 to the Msg.3 PUSCH transmission in a random access procedure (before RRC connection).

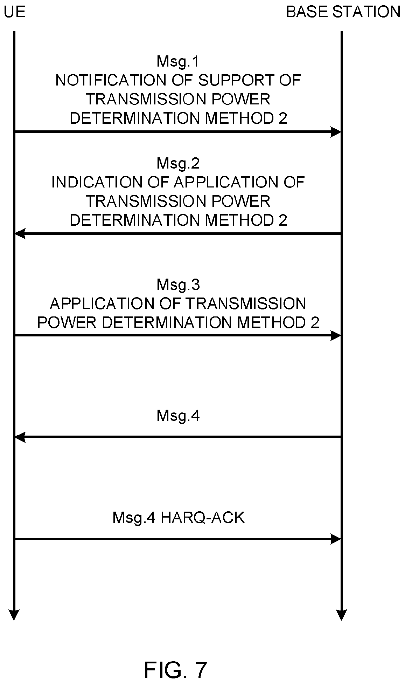

As shown in Fig. 7, UEs that support the transmission power determination method 2 may report that they support the transmission power determination method 2 by selecting a RACH (Random Access Channel) resource of Msg.1.

The UE that supports the transmission power determination method 2 may determine the RACH resource by reading the RACH resource notified from the NW by a given method, and transmit Msg.1 by using the determined RACH resource. The UE that does not support the transmission power determination method 2 may transmit Msg.1 by using the RACH resource notified from the NW.

The UE that supports the transmission power determination method 2 may determine the RACH resource by selecting the RACH resource by the following RACH resource selection method and replacing the selected RACH resource with a given method. For example, the UE may determine the RACH resource by adding a given resource offset to the selected RACH resource.

<< RACH resource selection method >> The UE may be provided, by higher layer parameters, with the number N of SS/PBCH (Synchronization Signal/Physical Broadcast Channel) blocks associated with one PRACH (Physical Random Access Channel) occasion, and the number R of contention-based preambles per SS/PBCH block. If N is less than 1, one SS/PBCH block is mapped to 1/N consecutive PRACH occasions. If N is greater than or equal to 1, R contention-based preambles with continuous indexes associated with SS/PBCH block n (0 ≤ n ≤ N-1) per PRACH occasion start from a preamble index n 64/N. The SS/PBCH block index may be mapped on the PRACH occasion according to the preamble index within a single PRACH occasion, the frequency resource index for frequency-multiplexed PRACH occasions, the time resource index time-multiplexed within one PRACH slot, and the index of PRACH slots.

The resource offset may be at least one of a preamble (sequence) index, a frequency resource index, a time resource index, and a PRACH slot index.

Whether to request the UE that supports the transmit power determination method 2 to apply the transmission power determination method 2 to Msg.3 (whether to report to Msg.1 that the transmission power determination method 2 is supported) may be determined depending on the UE (may depend on the UE implementation), or may be indicated by broadcast information (for example, SS/PBCH block) from the NW.

The UE that does not support the transmission power determination method 2 may determine the RACH resource by the RACH resource selection method described above.

The UE that supports the transmission power determination method 2 may decide whether to apply the transmission power determination method 2 to the Msg.3 PUSCH according to at least one of the following Msg.3 transmission methods 1 and 2.

### > Msg.3 transmission method 1

As shown in Fig. 7, the UE may be indicated by the NW using Msg.2 whether to apply the transmission power determination method 2 to the Msg.3 PUSCH.

The instruction as to whether to apply the transmission power determination method 2 to the Msg.3 PUSCH may be any of the following instructions 1 to 4.
- Instruction 1: The UE may be notified of the instruction by bit {0,1} contained in the Msg.2 DCI.
- Instruction 2: The UE may be notified of the instruction by a combination of a plurality of bit fields included in the Msg.2 DCI.
- Instruction 3: The UE may be notified of the instruction using the physical resources of the Msg.2 PDCCH (e.g., frequency resources). For example, the UE may be notified of the instruction by whether the value obtained when the CCE index of the Msg.2 PDCCH is divided by the aggregation level is even or odd. The UE may be notified of the instruction by the value associated with the CCE index.
- Instruction 4: The UE may be notified of the instruction by selecting the search space of Msg.2 PDCCH or CORESET. The UE may be notified of the instruction depending on which of two candidates: the search space ID and the CORESET ID that has received Msg.2 is used.

According to this Msg.3 transmission method 1, it is possible to flexibly configure whether or not the transmission power determination method 2 is applied to the Msg.3 PUSCH.

### > Msg.3 transmission method 2

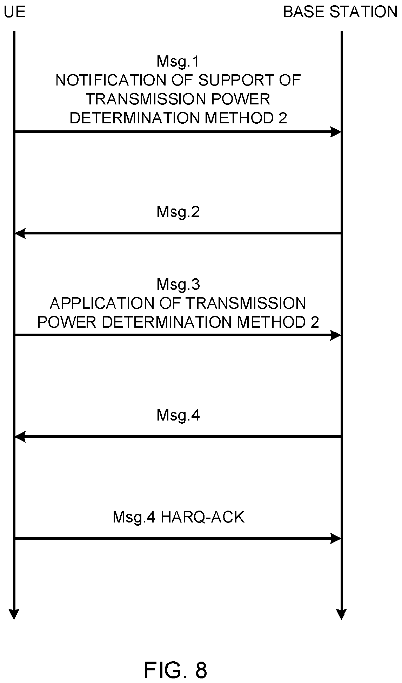

As shown in Fig. 8, whether the UE applies the transmission power determination method 2 to the Msg.3 PUSCH may not be indicated from the NW. The UE may apply the transmission power determination method 2 to the Msg.3 PUSCH transmission.

According to this Msg.3 transmission method 2, since the same total transmission power as when using the full coherent precoding matrix can be used for transmission, the coverage and the SN ratio (communication quality) can be improved.

The UE that applies the transmission power determination method 2 to the Msg.3 PUSCH may follow one of the following PUSCH transmission methods 1-1, 1-2 as to whether to apply the transmission power determination method 2 to the PUSCH from the Msg.3 PUSCH to the RRC connection.

### > PUSCH transmission method 1-1

The UE that supports the transmission power determination method 2 applies the transmission power determination method 2 to Msg.3 and the transmission power determination method 2 to the PUSCH from the Msg.3 PUSCH to the RRC connection (for example, Msg.4 HARQ-ACK).

According to this PUSCH transmission method 1-1, the coverage can be improved when the transmission power determination method 2 is applied to the PUSCH before the RRC connection.

### > PUSCH transmission method 1-2

The UE that supports the transmission power determination method 2 applies the transmission power determination method 2 to Msg.3 and does not apply the transmission power determination method 2 to the PUSCH from the Msg.3 PUSCH to the RRC connection (for example, Msg.4 HARQ-ACK).

According to this PUSCH transmission method 1-2, the NW can flexibly configure whether or not the transmission power determination method 2 is applied after the RRC connection.

The UE that applies the transmission power determination method 2 to the Msg.3 PUSCH may follow one of the following PUSCH transmission methods 2-1, 2-2 as to whether to apply the transmission power determination method 2 to the PUSCH after the RRC connection.

### > PUSCH transmission method 2-1

The UE that supports the transmission power determination method 2 applies the transmission power determination method 2 to the Msg.3 and applies the transmission power determination method 2 to the PUSCH after the RRC connection. That is, the UE applies the transmission power determination method 2 to the PUSCH after the RRC connection regardless of the instruction from the NW.

According to this PUSCH transmission method 2-1, the coverage can be improved when the transmission power determination method 2 is applied to the PUSCH after the RRC connection.

### > PUSCH transmission method 2-2

The UE that supports the transmission power determination method 2 applies the transmission power determination method 2 to the Msg.3, and if the transmission power determination method 2 is configured by higher layer signaling after the RRC connection, applies the transmission power determination method 2 to the PUSCH after the RRC connection. If the transmission power determination method 2 is not configured by higher layer signaling after the RRC connection, the transmission power determination method 2 is not applied to the PUSCH after the RRC connection.

According to this PUSCH transmission method 2-2, the NW can flexibly configure whether or not the transmission power determination method 2 is applied after the RRC connection.

According to this aspect 4, the coverage can be improved by the UE applying the transmission power determination method 2 even before the RRC connection.

### <Other aspects>

Each of the above aspects may be applied to the transmission of UL signals such as a measurement reference signal (SRS: Sounding Reference Signal) and a phase tracking reference signal (PTRS), or may be applied to the transmission of a UL channel such as a PUCCH.

### (Radio Communication System)

Now, the structure of a radio communication system according to one embodiment will be described below. In this radio communication system, communication is performed using one or a combination of the radio communication methods according to the above embodiments.

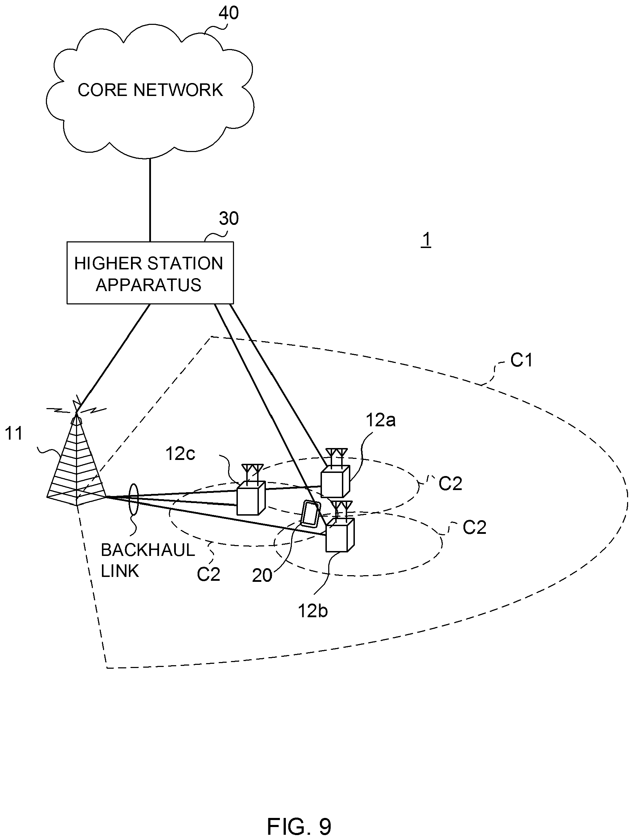

Fig. 9 is a diagram illustrating an example of a schematic configuration of a radio communication system according to one embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be seen as a system to implement these.

The radio communication system 1 includes a base station 11 that forms a macro cell C1 covering a relatively wide coverage, and base stations 12 (12a to 12c) that are placed within the macro cell C1 and that form small cells C2, which are narrower than the macro cell C1. Also, a user terminal 20 is placed in the macro cell C1 and in each small cell C2. The arrangement, number and so on of cells and user terminals 20 are not limited to an aspect shown in the drawings.

The user terminal 20 can connect with both the base station 11 and the base stations 12. The user terminals 20 may use the macro cell C1 and the small cells C2 at the same time using CA or DC. Furthermore, the user terminals 20 may apply CA or DC using a plurality of cells (CCs) (for example, five or fewer CCs or six or more CCs).

Between the user terminal 20 and the base station 11, communication can be carried out using a carrier of a relatively low frequency band (for example, 2 GHz) and a narrow bandwidth (referred to as an "existing carrier," a "legacy carrier" and so on). Meanwhile, between the user terminal 20 and the base stations 12, a carrier of a relatively high frequency band (for example, 3.5 GHz, 5 GHz and so on) and a wide bandwidth may be used, or the same carrier as that used in the base station 11 may be used. Note that the structure of the frequency band for use in each base station is by no means limited to these.

Moreover, the user terminal 20 can perform communication in each cell using time division duplex (TDD) and/or frequency division duplex (FDD). Further, in each cell (carrier), a single numerology may be applied, or a plurality of different numerologies may be applied.

The base station 11 and the base station 12 (or between two base stations 12) may be connected by wire (for example, means in compliance with the common public radio interface (CPRI) such as optical fiber, an X2 interface, and so on) or wirelessly.

The base station 11 and the base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each base station 12 may be connected with the higher station apparatus 30 via the base station 11.

Note that the base station 11 is a base station having a relatively wide coverage, and may be referred to as a "macro base station," an "aggregate node," an "eNB (eNodeB)," a "transmission/reception point" and so on. Also, the base stations 12 are base stations having local coverages, and may be referred to as "small base stations," "micro base stations," "pico base stations," "femto base stations," "HeNBs (Home eNodeBs)," "RRHs (Remote Radio Heads)," "transmission/reception points" and so on. Hereinafter the base stations 11 and 12 will be collectively referred to as "base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier transmission scheme to perform communication by dividing a frequency bandwidth into a plurality of narrow frequency bandwidths (subcarriers) and mapping data to each subcarrier. SC-FDMA is a single-carrier transmission scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and other radio access schemes can be used as well.

In the radio communication system 1, a downlink shared channel (Physical Downlink Shared Channel (PDSCH)), which is used by each user terminal 20 on a shared basis, a broadcast channel (Physical Broadcast Channel (PBCH)), downlink L1/L2 control channels, and so on are used as downlink channels. User data, higher layer control information and SIBs (System Information Blocks) and so on are transmitted in the PDSCH. Further, a master information block (MIB) is transmitted by the PBCH.

The downlink L1/L2 control channels include a physical downlink control channel (PDCCH), an enhanced physical downlink control channel (EPDCCH), a physical control format indicator channel (PCFICH), a physical hybrid-ARQ indicator channel (PHICH), and so on. Downlink control information (DCI), including PDSCH and/or PUSCH scheduling information, and so on, is transmitted by the PDCCH.

Note that scheduling information may be notified via the DCI. For example, the DCI to schedule receipt of DL data may be referred to as "DL assignment," and the DCI to schedule UL data transmission may be referred to as "UL grant."

The number of OFDM symbols to use for the PDCCH is transmitted by the PCFICH. HARQ (Hybrid Automatic Repeat reQuest) delivery acknowledgement information (also referred to as, for example, "retransmission control information," "HARQ-ACKs," "ACK/NACKs," etc.) in response to the PUSCH is transmitted by the PHICH. The EPDCCH is frequency-division-multiplexed with the downlink shared data channel (PDSCH) and used for transmission of the DCI and so on, like the PDCCH.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)), and so on are used as uplink channels. User data, higher layer control information and so on are transmitted by the PUSCH. Also, in the PUCCH, downlink radio quality information (CQI (Channel Quality Indicator)), delivery acknowledgement information, scheduling requests (SRs) and so on are transmitted. By means of the PRACH, random access preambles for establishing connections with cells are transmitted.

In the radio communication systems 1, cell-specific reference signal (CRSs), channel state information reference signal (CSI-RSs), demodulation reference signal (DMRSs), positioning reference signal (PRSs) and so on are transmitted as downlink reference signals. Also, in the radio communication system 1, measurement reference signals (SRSs (Sounding Reference Signals)), demodulation reference signals (DMRSs) and so on are transmitted as uplink reference signals. Note that, DMRSs may be referred to as "user terminal-specific reference signals (UE-specific Reference Signals)." Also, the reference signals to be transmitted are by no means limited to these.

### (Base Station)

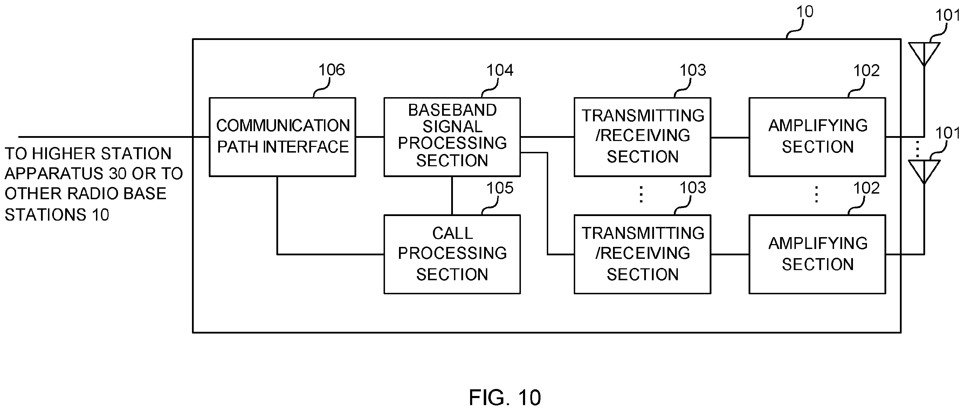

Fig. 10 is a diagram showing an example of an overall configuration of a base station according to one embodiment. A base station 10 has a plurality of transmitting/receiving antennas 101, amplifying sections 102, transmitting/receiving sections 103, a baseband signal processing section 104, a call processing section 105 and a transmission path interface 106. Note that one or more transmitting/receiving antennas 101, amplifying sections 102 and transmitting/receiving sections 103 may be provided.

User data to be transmitted from the base station 10 to the user terminal 20 on the downlink is input from the higher station apparatus 30 to the baseband signal processing section 104, via the transmission path interface 106.

In the baseband signal processing section 104, the user data is subjected to transmission processing, including processing of a packet data convergence protocol (PDCP) layer, division and coupling of the user data, radio link control (RLC) layer transmission processing such as RLC retransmission control, medium access control (MAC) retransmission control (for example, HARQ transmission processing), scheduling, transmission format selection, channel coding, inverse fast Fourier transform (IFFT) processing, and precoding processing, and a result is forwarded to each transmitting/receiving section 103. Furthermore, downlink control signals are also subjected to transmission processing such as channel coding and an inverse fast Fourier transform, and forwarded to the transmitting/receiving sections 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatuses that can be described based on general understanding of the technical field to which the present invention pertains. Note that the transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the base band signal through frequency conversion in the transmitting/receiving sections 103 and output to the baseband signal processing section 104.

In the baseband signal processing section 104, user data that is included in the uplink signals that are input is subjected to fast Fourier transform (FFT) processing, inverse discrete Fourier transform (IDFT) processing, error correction decoding, MAC retransmission control receiving processing, and RLC layer and PDCP layer receiving processing, and forwarded to the higher station apparatus 30 via the transmission path interface 106. The call processing section 105 performs call processing (such as setting up and releasing) of communication channels, manages the state of the base stations 10 and manages the radio resources.

The transmission path interface 106 transmits and receives signals to and from the higher station apparatus 30 via a given interface. Also, the transmission path interface 106 may transmit and receive signals (backhaul signaling) with other base stations 10 via an inter-base station interface (which is, for example, optical fiber that is in compliance with the CPRI (Common Public Radio Interface), the X2 interface, etc.).

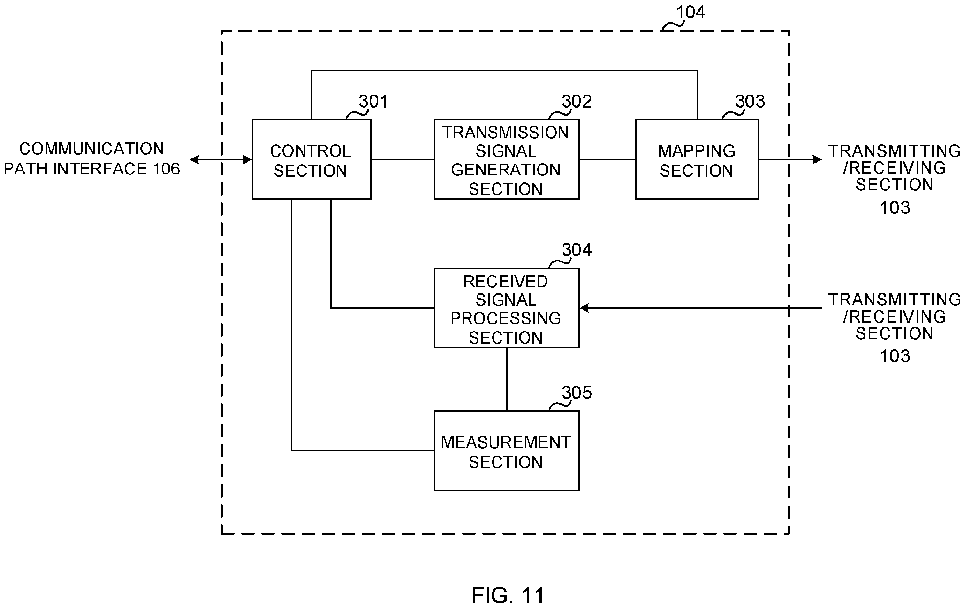

Fig. 11 is a diagram showing an example of a functional configuration of the base station according to one embodiment. Note that, although this example will primarily show functional blocks that pertain to characteristic parts of the present embodiment, it may be assumed that the base station 10 has other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the base station 10, and some or all of these configurations may not be included in the baseband signal processing section 104.

The control section (scheduler) 301 controls the whole of the base station 10. The control section 301 can be constituted by a controller, a control circuit or control apparatus that can be described based on general understanding of the technical field to which the present invention pertains.

For example, the control section 301 controls the generation of signals in the transmission signal generation section 302, the allocation of signals in the mapping section 303, and the like. Furthermore, the control section 301 controls the signal receiving processing in the received signal processing section 304, the measurements of signals in the measurement section 305, and so on.

The control section 301 controls the scheduling (for example, resource allocation) of system information, downlink data signals (for example, signals transmitted in the PDSCH), and downlink control signals (for example, signals that are transmitted in the PDCCH and/or the EPDCCH, such as delivery acknowledgement information). The control section 301 controls the generation of downlink control signals, downlink data signals, and the like based on results of determining whether or not retransmission control is necessary for uplink data signals, and the like. Also, the control section 301 controls the scheduling of synchronization signals (for example, the Primary Synchronization Signal (PSS)/ Secondary Synchronization Signal (SSS)), downlink reference signals (for example, the CRS, the CSI-RS, the DMRS, etc.) and so on.

The control section 301 controls the scheduling for uplink data signals (for example, signals transmitted in the PUSCH), uplink control signals (for example, signals transmitted in the PUCCH and/or the PUSCH, and delivery acknowledgement information), random access preambles (signals transmitted in the PRACH for example), uplink reference signals, and the like.

The transmission signal generation section 302 generates downlink signals (downlink control signals, downlink data signals, downlink reference signals and so on) based on instructions from the control section 301, and outputs these signals to the mapping section 303. The transmission signal generation section 302 can be constituted by a signal generator, a signal generating circuit or signal generation apparatus that can be described based on general understanding of the technical field to which the present invention pertains.

For example, the transmission signal generation section 302 generates DL assignments, which notify downlink data allocation information, and/or UL grants, which notify uplink data allocation information, based on instructions from the control section 301. DL assignments and UL grants are both DCI, and follow the DCI format. Also, the downlink data signals are subjected to the coding processing, the modulation processing and so on, by using coding rates and modulation schemes that are determined based on, for example, channel state information (CSI) from each user terminal 20.

The mapping section 303 maps the downlink signals generated in the transmission signal generation section 302 to given radio resources based on instructions from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processing (for example, demapping, demodulation, decoding and so on) of received signals that are input from the transmitting/receiving sections 103. Here, the received signals include, for example, uplink signals transmitted from the user terminals 20 (uplink control signals, uplink data signals, uplink reference signals, etc.). The received signal processing section 304 can be constituted by a signal processor, a signal processing circuit or signal processing apparatus that can be described based on general understanding of the technical field to which the present invention pertains.

The received signal processing section 304 outputs, to the control section 301, information decoded by the receiving processing. For example, when a PUCCH to contain an HARQ-ACK is received, HARQ-ACK is output to the control section 301. Also, the received signal processing section 304 outputs the received signals and/or the signals after the receiving processing to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

For example, the measurement section 305 may perform RRM (Radio Resource Management) measurements, CSI (Channel State Information) measurements and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), SNR (Signal to Noise Ratio), etc.), the signal strength (for example, RSSI (Received Signal Strength Indicator)), propagation path information (for example, CSI), and so on. The measurement results may be output to the control section 301.

### (User Terminal)

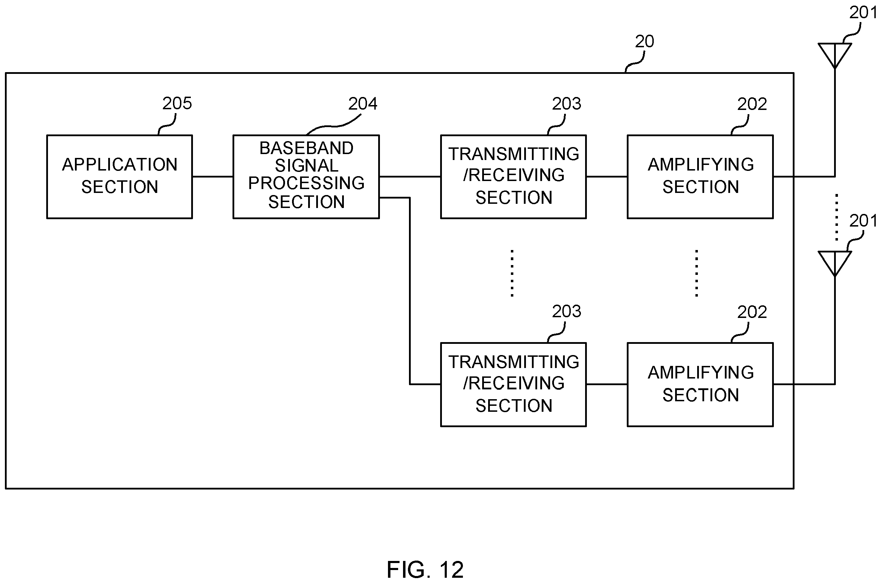

Fig. 12 is a diagram illustrating an example of an overall configuration of a user terminal according to an embodiment. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. The transmitting/receiving section 203 can be constituted by a transmitter/receiver, a transmitting/receiving circuit or transmitting/receiving apparatus that can be described based on general understanding of the technical field to which the present invention pertains. Note that the transmitting/receiving section 203 may be structured as a transmitting/receiving section in one entity, or may be constituted by a transmitting section and a receiving section.

The baseband signal processing section 204 performs receiving processing for the baseband signal that is input, including FFT processing, error correction decoding, retransmission control receiving processing and so on. Downlink user data is forwarded to the application section 205. The application section 205 performs processing related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs retransmission control transmission processing (for example, HARQ transmission processing), channel coding, precoding, discrete Fourier transform (DFT) processing, IFFT processing and so on, and the result is forwarded to the transmitting/receiving section 203. Baseband signals that are output from the baseband signal processing section 204 are converted into a radio frequency band in the transmitting/receiving sections 203 and transmitted. The radio frequency signals having been subjected to frequency conversion in the transmitting/receiving sections 203 are amplified in the amplifying sections 202, and transmitted from the transmitting/receiving antennas 201.

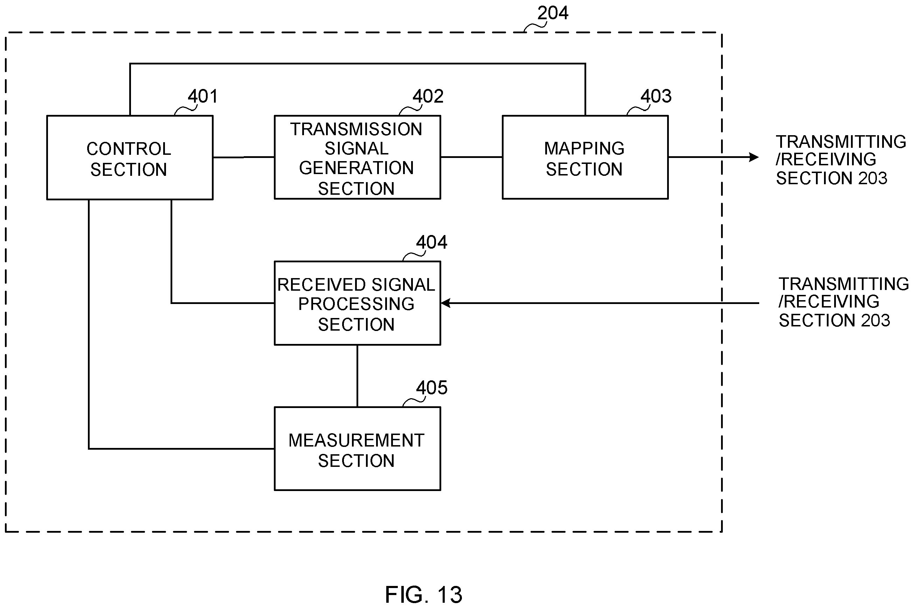

Fig. 13 is a diagram illustrating an example of a functional configuration of a user terminal according to an embodiment. Note that, although this example will primarily show functional blocks that pertain to characteristic parts of the present embodiment, it may be assumed that the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations may be included in the user terminal 20, and some or all of the configurations need not be included in the baseband signal processing section 204.

The control section 401 controls the whole of the user terminal 20. The control section 401 can be constituted by a controller, a control circuit or control apparatus that can be described based on general understanding of the technical field to which the present invention pertains.

The control section 401, for example, controls the generation of signals in the transmission signal generation section 402, the allocation of signals in the mapping section 403, and so on. Furthermore, the control section 401 controls the signal receiving processing in the received signal processing section 404, the measurements of signals in the measurement section 405 and so on.

The control section 401 acquires the downlink control signals and downlink data signals transmitted from the base station 10, via the received signal processing section 404. The control section 401 controls the generation of uplink control signals and/or uplink data signals based on the results of determining whether or not retransmission control is necessary for the downlink control signals and/or downlink data signals, and so on.

The transmission signal generation section 402 generates uplink signals (uplink control signals, uplink data signals, uplink reference signals, etc.) based on instructions from the control section 401, and outputs these signals to the mapping section 403. The transmission signal generation section 402 can be constituted by a signal generator, a signal generating circuit or signal generation apparatus that can be described based on general understanding of the technical field to which the present invention pertains.

For example, the transmission signal generation section 402 generates uplink control signals related to, for example, delivery acknowledgement information, channel state information (CSI) and so on, based on instructions from the control section 401. Also, the transmission signal generation section 402 generates uplink data signals based on instructions from the control section 401. For example, when a UL grant is included in a downlink control signal that is notified from the base station 10, the control section 401 indicates the transmission signal generation section 402 to generate an uplink data signal.

The mapping section 403 maps the uplink signals generated in the transmission signal generation section 402 to radio resources based on instructions from the control section 401, and output the result to the transmitting/receiving section 203. The mapping section 403 can be constituted by a mapper, a mapping circuit or mapping apparatus that can be described based on general understanding of the technical field to which the present invention pertains.

The received signal processing section 404 performs receiving processing (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the information decoded through the receiving processing to the control section 401. The received signal processing section 404 outputs, for example, broadcast information, system information, RRC signaling, DCI and so on, to the control section 401. Also, the received signal processing section 404 outputs the received signals and/or the signals after the receiving processing to the measurement section 405.

The measurement section 405 conducts measurements with respect to the received signals. The measurement section 405 can be constituted by a measurer, a measurement circuit or measurement apparatus that can be described based on general understanding of the technical field to which the present invention pertains.

For example, the measurement section 405 may perform RRM measurements, CSI measurements and so on based on the received signals. The measurement section 405 may measure the received power (for example, RSRP), the received quality (for example, RSRQ, SINR, SNR, etc.), the signal strength (for example, RSSI), propagation path information (for example, CSI), and so on. The measurement results may be output to the control section 401.

The transmitting/receiving section 203 may transmit a signal based on the precoding matrix (precoder, codebook).

When the value (element) of a part of the precoding matrix is zero, the control section 401 may correct the transmission power of the signal.

The control section 401 may determine whether to apply the correction on the basis of at least one of the information notified from the base station (higher layer signaling, precoder type (codebookSubset), DCI, etc.) and the information reported to the base station regarding the capability related to the precoding matrix (UE capability information, precoder type).

When the value of the part of the precoding matrix is zero, the control section 401 may perform one of the following: setting a first sum of the transmission power of all antenna ports (the sum of the transmission power when the full coherent precoding matrix is used) to be equal to a second sum of the transmission power of all antenna ports when all values of the precoding matrix are nonzero (the sum of the transmission power when the partial coherent or non-coherent precoding matrix is used), setting the first sum to be equal to the value obtained by multiplying the second sum by a first coefficient less than 1 (e.g., α1), and multiplying the value of the precoding matrix by a second coefficient greater than 1 (e.g., α2).

The control section 401 may report at least one of whether to support the correction, the first coefficient, the second coefficient, and the maximum amplification factor (for example, β) of the power or amplitude of the signal by the correction.

The control section 401 may apply the correction to the uplink shared channel (at least one of Msg.3 and Msg.4 HARQ-ACK) in the random access procedure.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be achieved by a single apparatus physically or logically aggregated, or may be achieved by directly or indirectly connecting two or more physically or logically separate apparatuses (using wires, radio, or the like, for example) and using these plural apparatuses. The functional block may be realized by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, and deeming, broadcasting, notifying, communicating, forwarding, configuring, reconfiguring, allocating, mapping, and assigning. For example, a functional block (configuration section) that causes transmission to function may be referred to as a transmitting section (transmitting unit), a transmitter, or the like. In any case, as described above, the implementation method is not particularly limited.

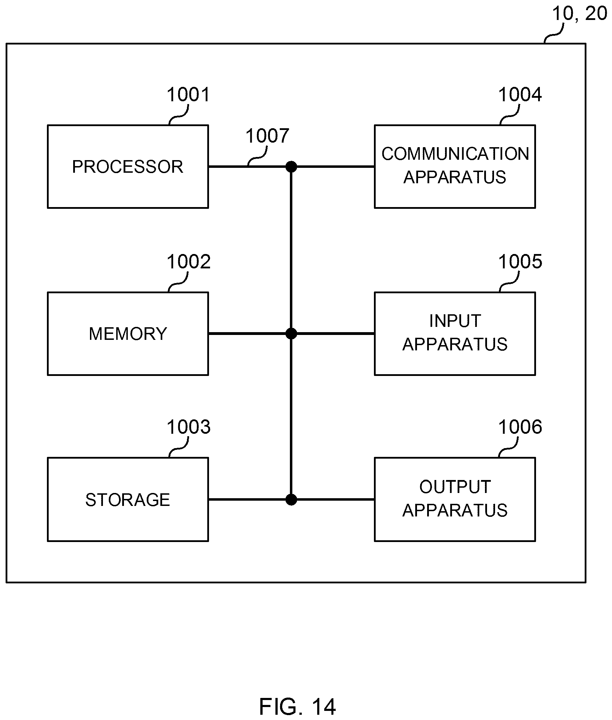

For example, the base station, the user terminal, and so on according to one embodiment of the present disclosure may function as a computer that executes the processing of the radio communication method of the present disclosure. Fig. 14 is a diagram showing an example of a hardware structure of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006 and a bus 1007.

In the present disclosure, the terms such as apparatus, circuit, device, section, and unit can be read as each other. The hardware structure of the base station 10 and the user terminal 20 may be configured to include one or more of each apparatus shown in the drawings, or may be designed not to include some apparatuses.

For example, although only one processor 1001 is shown, a plurality of processors may be provided. Furthermore, processing may be implemented with one processor, or processing may be implemented in sequence, or in different manners, on two or more processors. Note that the processor 1001 may be implemented with one or more chips.

Each function of the base station 10 and the user terminal 20 is implemented by reading given software (program) on hardware such as the processor 1001 and the memory 1002, and by controlling the operation in the processor 1001, the communication in the communication apparatus 1004, and at least one of the reading and writing of data in the memory 1002 and the storage 1003.

The processor 1001 controls the whole computer by, for example, running an operating system. The processor 1001 may be configured with a central processing unit (CPU), which includes interfaces with peripheral equipment, a control apparatus, a computing apparatus, a register and so on. For example, the above-described baseband signal processing section 104 (204), call processing section 105 and so on may be implemented by the processor 1001.

Furthermore, the processor 1001 reads programs (program codes), software modules, or data, from at least one of the storage 1003 and the communication apparatus 1004, into the memory 1002, and executes various processing according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for performing inter-computer communication via at least one of a wired network and a wireless network, and for example, is referred to as "network device", "network controller", "network card", "communication module", and the like. The communication apparatus 1004 may be configured to include a high frequency switch, a duplexer, a filter, a frequency synthesizer and so on in order to realize, for example, at least one of frequency division duplex (FDD) and time division duplex (TDD). For example, the above-described transmitting/receiving antennas 101 (201), amplifying sections 102 (202), transmitting/receiving sections 103 (203), transmission path interface 106 and so on may be implemented by the communication apparatus 1004. The transmitting/receiving section 103 (203) may be implemented by physically or logically separating a transmitting section 103a (203a) and a receiving section 103b (203b).

The input apparatus 1005 is an input device for receiving input from the outside (for example, a keyboard, a mouse, a microphone, a switch, a button, a sensor and so on). The output apparatus 1006 is an output device for allowing output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these apparatuses including the processor 1001, the memory 1002 and so on are connected by the bus 1007 so as to communicate information. The bus 1007 may be formed with a single bus, or may be formed with buses that vary between apparatuses.

Also, the base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in the present disclosure and the terminology that is needed to understand the present disclosure may be replaced by other terms that convey the same or similar meanings. For example, channels, symbols and signals (signals or signaling) may be read interchangeably. Also, "signals" may be replaced by "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

A radio frame may be configured by one or more periods (frames) in the time domain. Each of one or more periods (frames) constituting a radio frame may be referred to as a "subframe." Furthermore, a subframe may be configured by one or multiple slots in the time domain. A subframe may be a fixed time duration (for example, 1 ms) that is not dependent on numerology.

Here, the numerology may be a communication parameter applied to at least one of transmission and reception of a certain signal or channel. For example, the numerology may indicate at least one of SubCarrier Spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain and so on.

A slot may be configured by one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology.

A slot may include a plurality of minislots. Each minislot may be configured by one or more symbols in the time domain. Also, a minislot may be referred to as a "subslot." Each minislot may be configured by fewer symbols than a slot. A PDSCH (or PUSCH) transmitted in a time unit larger than a minislot may be referred to as PDSCH (PUSCH) mapping type A. A PDSCH (or PUSCH) transmitted using a minislot may be referred to as "PDSCH (PUSCH) mapping type B."

A radio frame, a subframe, a slot, a minislot and a symbol all represent the time unit in signal transmission. A radio frame, a subframe, a slot, a minislot and a symbol may be each called by other applicable names. Note that time units such as a frame, a subframe, a slot, a minislot, and a symbol in the present disclosure may be replaced with each other.

For example, one subframe may be referred to as a "transmission time interval (TTI)," or a plurality of consecutive subframes may be referred to as a "TTI," or one slot or minislot may be referred to as a "TTI." That is, at least one of a subframe and a TTI may be a subframe (1 ms) in existing LTE, may be a shorter period than 1 ms (for example, one to thirteen symbols), or may be a longer period of time than 1 ms. Note that the unit to represent the TTI may be referred to as a "slot," a "minislot" and so on, instead of a "subframe."

Here, a TTI refers to the minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. Note that when TTI is given, a time interval (for example, the number of symbols) in which the transport blocks, the code blocks, the codewords, and the like are actually mapped may be shorter than TTI.

Note that, when one slot or one minislot is referred to as a "TTI," one or more TTIs (that is, one or multiple slots or one or more minislots) may be the minimum time unit of scheduling. Also, the number of slots (the number of minislots) to constitute the minimum time unit of scheduling may be controlled.

A TTI having a time length of 1 ms may be called usual TTI (TTI in LTE Rel. 8 to 12), normal TTI, long TTI, a usual subframe, a normal subframe, a long subframe, a slot, or the like. A TTI that is shorter than a usual TTI may be referred to as "shortened TTI", "short TTI", "partial TTI" (or "fractional TTI"), "shortened subframe", "short subframe", "minislot", "subslot", "slot", or the like.

Note that a long TTI (for example, a normal TTI, a subframe, etc.) may be replaced with a TTI having a time length exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be 12, for example. The number of subcarriers included in the RB may be determined based on numerology.

Also, an RB may include one or more symbols in the time domain, and may be one slot, one minislot, one subframe or one TTI in length. One TTI, one subframe, and the like each may be configured by one or more resource blocks.

Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be configured by one or more resource elements (REs). For example, one RE may be a radio resource area of one subcarrier and one symbol.

The bandwidth part (BWP) (which may be called partial bandwidth etc.) may represent a subset of consecutive common RB (common resource blocks) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE may not assume to transmit or receive a given signal/channel outside the active BWP. Note that "cell", "carrier", and the like in the present disclosure may be read as "BWP".

Note that the structures of radio frames, subframes, slots, minislots, symbols and so on described above are merely examples. For example, configurations such as the number of subframes included in a radio frame, the number of slots included in a subframe or radio frame, the number of minislots included in a slot, the number of symbols and RBs included in a slot or a minislot, the number of subcarriers included in an RB, the number of symbols in a TTI, the symbol length, the length of cyclic prefixes (CPs) and so on can be variously changed.

Also, the information and parameters described in the present disclosure may be represented in absolute values or in relative values with respect to given values, or may be represented using other applicable information. For example, a radio resource may be indicated by a given index.

The names used for parameters and so on in the present disclosure are in no respect limiting. In addition, an equation and so on using these parameters may differ from those explicitly disclosed in the present disclosure. Since various channels (PUCCH (Physical Uplink Control CHannel), PDCCH (Physical Downlink Control CHannel) and so on) and information elements can be identified by any suitable names, the various names allocated to these individual channels and information elements are in no respect limiting.

The information, signals and so on described in the present disclosure may be represented by using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals and the like can be output in at least one of a direction from higher layers to lower layers and a direction from lower layers to higher layers. Information, signals and so on may be input and output via a plurality of network nodes.

The information, signals and so on that are input and output may be stored in a specific location (for example, in a memory), or may be managed in a management table. The information, signals and so on that are input and output can be overwritten, updated or appended. The information, signals and so on that are output may be deleted. The information, signals and so on that are input may be transmitted to other apparatuses.

The notification of information is by no means limited to the aspects/embodiments described in the present disclosure, and may be performed using other methods. For example, notification of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs) and so on), MAC (Medium Access Control) signaling and so on), other signals, or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be notified using, for example, MAC control elements (MAC CEs (Control Elements)).

Also, notification of given information (for example, notification "being X") does not necessarily have to be given explicitly, but can be given implicitly (for example, by not notifying the given information or by notifying another piece of information).

Decisions may be made in values represented by one bit (0 or 1), may be made in Boolean values that represent true or false, or may be made by comparing numerical values (for example, comparison with a given value).

Software, whether or not referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, instructions, information and so on may be transmitted and received via transmission media. For example, when software is transmitted from a website, a server or other remote sources by using at least one of wired technologies (coaxial cables, optical fiber cables, twisted-pair cables, digital subscriber lines (DSLs), and the like) and wireless technologies (infrared radiation, microwaves, and the like), at least one of these wired technologies and wireless technologies are also included in the definition of communication media.

The terms "system" and "network" as used in the present disclosure may be used interchangeably.

In the present disclosure, terms such as "precoding", "precoder", "weight (precoding weight)", "quasi-co-location (QCL)", "TCI state (Transmission Configuration Indication state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", "panel" may be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier," and "component carrier" may be used interchangeably. The base station may be called a term such as a macro cell, a small cell, a femto cell, a pico cell, and the like.

A base station can accommodate one or more (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to all or part of the coverage area of at least one of a base station and a base station subsystem that provides communication services within this coverage.

In the present disclosure, the terms "mobile station (MS)", "user terminal", "user equipment (UE)", "terminal", etc. may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station and a mobile station may be referred to as transmitting apparatus, receiving apparatus, communication apparatus and so on. Note that at least one of the base station and the mobile station may be a device mounted on a moving body, a moving body itself, or the like. The moving body may be a transportation (for example, a car, an airplane and so on), an unmanned moving body (for example, a drone, an autonomous car and so on), or a (manned or unmanned) robot. Note that at least one of the base station and the mobile station also includes a device that does not necessarily move during a communication operation. For example, at least one of the base station and the mobile station may be an IoT (Internet of Things) device such as a sensor.

Furthermore, the base stations in the present disclosure may be read as the user terminal. For example, each aspect/embodiment of the present disclosure may be applied to a structure in which communication between the base station and the user terminal is replaced by communication among a plurality of user terminals (which may be referred to as, for example, D2D (Device-to-Device), V2X (Vehicle-to-Everything) and so on). In this case, the user terminal 20 may have the functions of the base station 10 described above. In addition, the wording such as "up" and "down" may be replaced with the wording corresponding to the terminal-to-terminal communication (for example, "side"). For example, an uplink channel and a downlink channel may be interpreted as a side channel.

Likewise, the user terminal in the present disclosure may be interpreted as the base station. In this case, the base station 10 may have the functions of the user terminal 20 described above.

Certain operations that have been described in the present disclosure to be performed by base stations may, in some cases, be performed by their upper nodes. In a network including one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments described in the present disclosure may be used individually or in combinations, which may be switched depending on implementation. The order of processing, sequences, flowcharts and so on that have been used to describe the aspects/embodiments in the present disclosure may be re-ordered as long as inconsistencies do not arise. For example, although various methods have been described in the present disclosure with various components of steps using exemplary orders, the specific orders that are shown herein are by no means limiting.

The aspects/embodiments described in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and next generation systems that are enhanced based on these. Further, a plurality of systems may be combined and applied (for example, a combination of LTE or LTE-A and 5G).

The phrase "based on" as used in the present disclosure does not mean "based only on", unless otherwise specified. In other words, the phrase "based on" means both "based only on" and "based at least on."

Reference to elements with designations such as "first," "second" and so on as used in the present disclosure does not generally limit the number/quantity or order of these elements. These designations may be used in the present disclosure only for convenience, as a method for distinguishing between two or more elements. In this way, reference to the first and second elements does not imply that only two elements may be employed, or that the first element must precede the second element in some way.

The terms "judge" and "determine" as used in the present disclosure may encompass a wide variety of operations. For example, "determining" may be regarded as judging, calculating, computing, processing, deriving, investigating, looking up, search, inquiry (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, to "judge" and "determine" as used herein may be interpreted to mean "assuming", "expecting", "considering" and so on.

The term "maximum transmission power" described in the present disclosure may mean the maximum value of transmission power, the nominal UE maximum transmission power, or the rated UE maximum transmission power.

As used in the present disclosure, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced by "access".

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy, such as electromagnetic energy having wavelengths in the radio frequency, microwave, and optical (both visible and invisible) domains.

In the present disclosure, the phrase "A and B are different" may mean "A and B are different from each other." Note that the term may mean that "A and B are different from C". The terms such as "leave" "coupled" and the like may be interpreted as "different".

When the terms such as "include," "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a transmitting section configured to transmit a signal based on a precoding matrix; and
a control section configured to correct transmission power of the signal when a value of a part of the precoding matrix is zero.

2. The user terminal according to claim 1, wherein the control section determines whether to apply the correction based on at least one of information notified from a base station and information reported to the base station regarding a capability related to the precoding matrix.

3. The user terminal according to claim 1 or 2, wherein when the value of the part of the precoding matrix is zero, the control section performs one of setting a first sum of transmission power of all antenna ports to be equal to a second sum of transmission power of all antenna ports when all values of the precoding matrix are nonzero, setting the first sum to be equal to a value obtained by multiplying the second sum by a first coefficient less than 1, and multiplying the value of the precoding matrix by a second coefficient greater than 1.

4. The user terminal according to claim 3, wherein the control section reports at least one of whether to support the correction, the first coefficient, the second coefficient, and a maximum amplification factor of power or amplitude of the signal by the correction.

5. The user terminal according to any one of claims 1 to 4, wherein the control section applies the correction to an uplink shared channel in a random access procedure.

6. A radio communication method of a user terminal, the method comprising:
transmitting a signal based on a precoding matrix; and
correcting transmission power of the signal when a value of a part of the precoding matrix is zero.
